# NEUE EUROPÄISCHE PATENTSCHRIFT

(11) **EP 0 467 158 B2**
(45) Veröffentlichungstag und Bekanntmachung des Hinweises auf die Entscheidung über den Einspruch: **09.04.1997**
(45) Hinweis auf die Patenterteilung: 15.06.1994
(21) Anmeldenummer: 91111089.8
(22) Anmeldetag: 04.07.1991
(51) Int. Cl.: B60Q 3/02, B60Q 9/00

(54) **Verzögerungsschaltung für die Innenraumbeleuchtung eines Kraftfahrzeuges**
Timing circuit for the interior light of a motor vehicle
Circuit de temporisation pour l'éclairage intérieur d'un véhicule

(30) Priorität: 14.07.1990 DE 4022479
(43) Veröffentlichungstag der Anmeldung: 22.01.1992
(73) Patentinhaber: Hella KG Hueck & Co., 59552 Lippstadt (DE)
(72) Erfinder: Stranghöner, Günter, W 4837 Verl 1 (DE); Schonart, Edgar, W-4780 Lippstadt 6 (DE)

(56) Entgegenhaltungen:
- EP-A- 0 138 919
- DE-A- 2 810 659
- DE-A- 2 854 729
- DE-A- 2 906 665
- DE-A- 2 949 457
- DE-A- 3 218 479
- DE-B- 2 827 117
- GB-A- 1 513 127
- US-A- 3 916 250
- US-A- 4 122 371
- US-A- 4 123 668
- US-A- 4 143 368

## Beschreibung

Die Erfindung betrifft eine Verzögerungsschaltung für die Innenraumbeleuchtung eines Kraftfahrzeuges mit mindestens einer Innenleuchte, mit die Innenleuchte schaltenden Schaltmitteln, mit einem die Steuerelektrode der Schaltmittel zeithaltend beeinflussenden Zeitglied, mit einem das Zeitglied steuernden Türkontaktschalter, mit einem zweiten Zeitglied und mit einem durch eine Zentralverriegelung des Kraftfahrzeuges steuerbaren Schalter.

Eine derartige Verzögerungsschaltung ist aus dem europäischen Patent 0 138 919 vorbekannt. Die dortige Verzögerungsschaltung weist eine Innenleuchte auf, die durch Schaltmittel schaltbar ist. Die Steuerelektrode der Schaltmittel wird zeithaltend durch ein Zeitglied beeinflußt, derart, daß nach dem öffnen einer oder mehrerer Kraftfahrzeugtüren und nach dem anschließenden Schließen die Innenraumbeleuchtung des Kraftfahrzeuges eine vorgegebene Zeitdauer eingeschaltet bleibt. Mit dieser Maßnahme soll dem Bediener des Kraftfahrzeuges beim Betreten des Kraftfahrzeuges und beim Verlassen des Kraftfahrzeuges im Dunkeln das Zurechtfinden im Kraftfahrzeug und in der Umgebung erleichtert werden.

Zusätzlich weist diese vorbekannte Verzögerungsschaltung ein zweites Zeitglied auf, das durch den Türkontaktschalter und einen Zündschalter des Kraftfahrzeuges steuerbar ist. Das Zeitglied wird durch das Schließen des Türkontaktschalters angesteuert und schaltet die Innenbeleuchtung nach einer vorgegebenen Zeit aus, wenn der Zündschalter des Zündschlosses offen ist. Mit diesen Maßnahmen soll ein Entladen der Fahrzeugbatterie bei längerem Offenstehen einer Fahrzeugtür vermieden werden.

Weiterhin wird die zeithaltende Beeinflussung der Schaltmittel zum Eingeschaltethalten der Innenleuchte bei der vorbekannten Schaltungsanordnung ohne weitere Verzögerung unterbrochen, wenn der Zündschalter eingeschaltet wird oder wenn ein durch eine Zentralverriegelung des Kraftfahrzeuges steuerbarer Schalter geschlossen wird.

Diese vorbekannte Verzögerungsschaltung weist jedoch Nachteile auf. Durch den dortigen durch die Zentralverriegelung des Kraftfahrzeuges steuerbaren Schalter wird allein die Innenleuchte des Kraftfahrzeuges während der Dauer der Zeitverzögerung abrupt abgeschaltet. Es sind jedoch keine Maßnahmen vorgesehen, mit denen die Einschaltung der Verzögerungsschaltung durch diesen Schalter möglich ist. Das heißt bei der vorbekannten Verzögerungsschaltung wird die Zeitverzögerung allein durch den Türkontaktschalter eingeschaltet, jedoch nicht durch den der Zentralverriegelung des Kraftfahrzeuges zugeordneten Schalter. Dies hat z. B. zur Folge, daß der Bediener des Kraftfahrzeuges während des Vorgangs der Entriegelung des Kraftfahrzeuges über die Zentralverriegelung im Dunkeln nicht den Innenraum des Kraftfahrzeuges einsehen kann.

Das dort vorgesehene zweite Zeitglied dient nicht zur Erleuchtung des Kraftfahrzeuginnenraumes während der normalen Bedienung des Kraftfahrzeuges. Zudem ist dieses zweite Zeitglied nicht durch den der Zentralverriegelung zugeordneten Schalter steuerbar.

Die Erfindung hat die Aufgabe, eine Verzögerungsschaltung für die Innenraumbeleuchtung eines Kraftfahrzeuges zu schaffen, die den Innenraum des Kraftfahrzeuges bereits bei der Entriegelung oder Verriegelung des Kraftfahrzeuges über die Zentralverriegelung erleuchtet und unterschiedliche Verzögerungszeiten für die Einschaltzeitdauer der Innenraumbeleuchtung abhängig davon ermöglicht, ob die Verzögerungsschaltung über den Türkontaktschalter oder über den der Zentralverriegelung zugeordneten Schalter eingeschaltet wird.

Diese Aufgabe wird erfindungsgemäß dadurch gelöst, daß das zweite Zeitglied durch den Schalter einschaltbar ist und daß das zweite Zeitglied die Steuerelektrode der Schaltmittel im Sinne einer Einschaltung der Innenleuchte zeithaltend beeinflußt.

Dadurch, daß das zweite Zeitglied durch den Schalter, der der Zentralverriegelung zugeordnet ist, einschaltbar ist, wird die erfindungsgemäße Verzögerungsschaltung bereits beim Verriegeln oder Entriegeln des Kraftfahrzeuges über die Zentralverriegelung eingeschaltet. Dadurch kann der Bediener des Kraftfahrzeuges z. B. bereits beim Entriegelungsvorgang im Dunkeln erkennen, was sich zu diesem Zeitpunkt im Kraftfahrzeuginnenraum abspielt, und ist aufgrund dieser erfindungsgemäßen Maßnahme in der Lage, die weiteren Bedienungselemente, wie z. B. den Kraftfahrzeugtürgriff, ohne längeres Suchen zu ergreifen.

Andererseits kann dadurch, daß das zweite Zeitglied durch den Zentralverriegelungsschalter einschaltbar ist, die Verzögerungszeitdauer für die Innenraumbeleuchtung bei Einschaltung der Verzögerungsschaltung über den Zentralverriegelungsschalter unterschiedlich gewählt werden zu der Verzögerungszeit bei Einschaltung der erfindungsgemäßen Verzögerungsschaltung über den Türkontaktschalter, um so den gegebenenfalls unterschiedlichen Bedienungsabläufen nur beim öffnen einer Kraftfahrzeugtür und bei deren Wiederschließen und bei Verriegelung oder Entriegelung des Kraftfahrzeuges über die Zentralverriegelung Rechnung zu tragen.

Dadurch, daß das zweite Zeitglied die Steuerelektrode der Schaltmittel zeithaltend, das heißt, im Sinne einer Verlängerung der Einschaltzeitdauer und im Sinne einer Verzögerung des Ausschaltvorganges beeinflußt, ist die erfindungsgemäße Verzögerungsschaltung insbesondere einfach und kostengünstig auszugestalten, da neben dem zweiten Zeitglied und dem durch die Zentralverriegelung des Kraftfahrzeuges steuerbaren Schalter keine zusätzlichen Mittel zum Aufbau der erfindungsgemäßen Verzögerungsschaltung erforderlich sind. Die Schaltmittel können gegebenenfalls parallel durch die beiden Zeitglieder angesteuert werden.

Vorteilhafte Ausgestaltungen und Weiterbildungen der erfindungsgemäßen Verzögerungsschaltung gehen aus den Unteransprüchen hervor.

Es ist besonders vorteilhaft, die Einschaltzeitdauer der Zeitglieder unterschiedlich zu wählen, wobei die Einschaltzeitdauer des zweiten Zeitglieds größer ist als die Einschaltzeitdauer des ersten Zeitglieds. Mit diesen Maßnahmen wird der Erkenntnis Rechnung getragen, daß z. B. der Entriegelungsvorgang des Kraftfahrzeuges zeitlich vor dem Öffnen der jeweiligen Kraftfahrzeugtür liegt. Das heißt, die Zeitdauer bis z. B. nach dem Entriegeln des Kraftfahrzeuges der Bediener das Kraftfahrzeug betreten hat, ist größer als die Zeitdauer, die vergeht, bis der Bediener des Kraftfahrzeuges das Kraftfahrzeug nach dem Öffnen der Tür betreten hat. Damit können die Einschaltzeitdauern vorteilhaft dem Zeitbedarf des Kraftfahrzeugbedieners zum Auffinden und Betätigen der Bedienungselemente im Kraftfahrzeug angepaßt werden.

Diese Maßnahme ist besonders vorteilhaft, wenn als Zentralverriegelung eine sogenannte fernbetätigbare Zentralverriegelung vorgesehen ist, bei der die Verriegelung und Entriegelung des Kraftfahrzeuges z. B. durch einen Infrarotstrahlung aussendenden Handsender erfolgt. Bei diesen fernbetätigbaren Zentralverriegelungen ist die Entriegelung des Kraftfahrzeuges z. B. auf eine Entfernung von mehreren Metern vom Kraftfahrzeug bereits möglich. Bis der Bediener des Kraftfahrzeuges dem Kraftfahrzeug so nahe getreten ist, daß er es betreten kann, vergeht dann eine noch längere als die oben beschriebene Zeitdauer, die durch entsprechende Anpassung der Einschaltzeitdauern des ersten und des zweiten Zeitgliedes kompensiert werden kann.

In diesem Zusammenhang ist es besonders vorteilhaft, vor allem bei Verwendung einer fernbetätigbaren Zentralverriegelung, die Einschaltzeitdauer des zweiten Zeitgliedes etwa 2- bis 5mal, insbesonderejedoch 4mal so lang zu wählen wie die Einschaltzeitdauer des ersten Zeitgliedes. Es hat sich hier als praxisgerecht erwiesen, als Einschaltzeitdauer des ersten Zeitgliedes eine Zeitdauer von etwa 8 Sekunden für die Ausschaltverzögerung der Innenbeleuchtung zu wählen. Demgemäß kann die Einschaltzeitdauer des zweiten Zeitgliedes mit etwa 30 Sekunden gewählt werden.

Um ein allzu langes, unnötiges und energieverbrauchendes Einschalten der Innenraumbeleuchtung durch die erfindungsgemäße Verzögerungsschaltung dann zu verhindern, wenn der Bediener des Kraftfahrzeuges die Kraftfahrzeugtür bereits geöffnet hat, ist es besonders vorteilhaft, wenn Verknüpfungsmittel vorgesehen sind, die das zweite Zeitglied unwirksam schalten, wenn das erste Zeitglied eingeschaltet ist. Es ist dann entsprechend dem vorher Gesagten die kürzere Verzögerungszeit nur des ersten Zeitgliedes wirksam, weil davon ausgegangen wird, daß der Bediener des Kraftfahrzeuges das Kraftfahrzeug relativ schnell betreten wird und dementsprechend die Bedienungselemente relativ schnell finden und betätigen wird.

Um auch bei eingeschalteter Zündung der Brennkraftmaschine des Kraftfahrzeuges einen unnötigen Energieverbrauch durch das überflüssige Leuchten der Innenraumbeleuchtung zu vermeiden, ist es besonders vorteilhaft, wenn ein Zündschalter vorgesehen ist, der bei eingeschalteter Zündung die Zeitglieder unwirksam schaltet. Dieses Unwirksamschalten kann vorteilhaft unabhängig davon erfolgen, ob die Zeitglieder gerade eingeschaltet sind oder nicht.

Um eine Verwendung der erfindungsgemäßen Verzögerungsschaltung auch in Kraftfahrzeugen zu ermöglichen, die keine Zentralverriegelung und damit gegebenenfalls keinen durch die Zentralverriegelung des Kraftfahrzeuges steuerbaren Schalter aufweisen, ist es besonders vorteilhaft, wenn das zweite Zeitglied durch eine Schaltflanke des Zentralverriegelungsschalters steuerbar ist. Bei dieser Ausgestaltung der erfindungsgemäßen Verzögerungsschaltung führt also nicht der Schaltzustand des Zentralverriegelungsschalters sondern nur der Vorgang der Betätigung des Zentralverriegelungsschalters zu einem Signal, durch das das zweite Zeitglied eingeschaltet wird. Da bei einem Kraftfahrzeug ohne Zentralverriegelung ein Wechsel des Schaltzustandes des Zentralverriegelungsschalters nicht auftreten kann, wäre bei Verwendung der erfindungsgemäßen Verzögerungsschaltung in einem derartigen Kraftfahrzeug das zweite Zeitglied einfach unwirksam, ohnejedoch die Funktion des ersten Zeitgliedes und damit die normale Verzögerungsfunktion für die Innenraumbeleuchtung zu behindern.

In diesem Zusammenhang kann ein drittes Zeitglied durch die jeweils andere Schaltflanke der Zentralverriegelung steuerbar sein, so daß z. B. beim Entriegeln des Kraftfahrzeuges das zweite Zeitglied mit einer langen Einschaltzeitdauer wirksam ist, um wie vorher beschrieben, dem Bediener des Kraftfahrzeuges im Dunkeln einen bequemen Zugang zum Kraftfahrzeug zu ermöglichen. Andererseits kann beim Verriegeln des Kraftfahrzeuges über die Zentralverriegelung durch Auswertung der entsprechenden Schaltflanke das dritte Zeitglied wirksam geschaltet werden, das dann die Innenraumbeleuchtung nur für eine kürzere Einschaltzeitdauer einschaltet, um dem Bediener des Kraftfahrzeuges noch einmal eine kurze Kontrolle des Kraftfahrzeuginnenraums und einen gesicherten, beleuchteten Weggang vom Kraftfahrzeug zu ermöglichen.

In diesem Zusammenhang ist es besonders vorteilhaft, wenn das dritte Zeitglied nur dann durch die andere Schaltflanke des Schalters steuerbar ist, wenn diese Schaltflanke während der Einschaltzeit des zweiten Zeitglieds auftritt und wenn die Türen des Kraftfahrzeuges geschlossen sind. Mit diesen Maßnahmen wird sichergestellt, daß nur nach dem kurz vorher erfolgtem Entriegeln des Kraftfahrzeugs und dem anschließenden Verriegeln die Zeitverzögerung der Ausschaltung der Innenbeleuchtung wirksam ist, wogegen nach längerem unverschlossenen Stehenlassen des Kraftfahrzeugs die erfindungsgemäße Verzögerungsschaltung nicht wirksam ist, da davon ausgegangen wird, daß in diesem Falle kein Bedarf für eine zusätzliche Innenraumbeleuchtung des Kraftfahrzeugs besteht.

In diesem Zusammenhang ist es ebenfalls besonders vorteilhaft, wenn als drittes Zeitglied das erste Zeitglied verwendet wird, das durch die andere Schaltflanke des Schalters zusätzlich steuerbar ist, weil so die Zahl der erforderlichen Zeitglieder reduziertwird und der Fertigungs- und Kostenaufwand für die erfindungsgemäße Verzögerungsschaltung verringert wird.

Die Zeitglieder können vorteilhaft elektrische RC-Glieder sein, die einfach und kostengünstig aus Widerständen und Kondensatoren aufgebaut werden können.

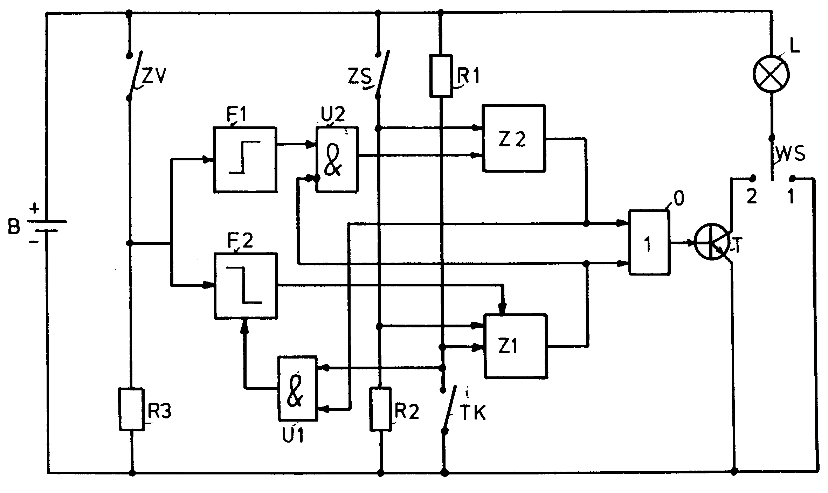

Ein Ausführungsbeispiel der erfindungsgemäßen Verzögerungsschaltung ist in der Zeichnung dargestellt und wird im folgenden anhand der Zeichnung näher erläutert.

Die einzige Figur zeigt eine erfindungsgemäße Verzögerungsschaltung, die durch einen Türkontaktschalter (TK), Zündschalter (ZS) und einen Zentralverriegelungsschalter (ZV) steuerbar ist. Eine Innenleuchte (L) des Kraftfahrzeuges ist mit dem positiven Pol (+) einer Kraftfahrzeugbatterie (B) oder Stromquelle leitend verbunden. Andererseits ist die Innenleuchte (L) mit einem Schaltkontakt eines Wahlschalters (WS) leitend verbunden, der drei Schaltstellungen aufweist. In der einen in der Figur dargestellten Schaltstellung ist der Schaltkontakt mit keinem weiteren Kontakt verbunden, so daß die Innenleuchte (L) ausgeschaltet ist. In der Schaltstellung (1) ist der Schaltkontakt des Wahlschalters (WS) direkt mit dem negativen Pol der Kraftfahrzeugbatterie (B) verbunden, so daß in dieser Schaltstellung die Innenleuchte (L) dauernd leuchtet. In der Schaltstellung (2) ist der Schaltkontakt des Wahlschalters (WS) mit einem Transistor (T) der erfindungsgemäßen Verzögerungsschaltung leitend verbunden, dessen anderer Anschluß der Schaltstrecke mit dem negativen Pol der Kraftfahrzeugstromquelle (B) leitend verbunden ist.

Die Steuerelektrode des Transistors (T) ist durch ein Oder-Glied (O) steuerbar, das als Eingangssignal die Ausgangssignale eines ersten Zeitgliedes (Z1), das als RC-GLied ausgebildet ist und eine Verzögerungszeitdauer von 8 Sekunden aufweist, und eines zweiten Zeitgliedes (Z2), das ebenfalls als RC-Glied ausgebildet ist und eine Verzögerungszeitdauer von 30 Sekunden aufweist, empfängt.

Die Zeitglieder (Z1, Z2) sind mit dem Mittelabgriff einer Reihenschaltung eines zweiten Widerstandes (R2) und eines Zündschalters (ZS) leitend verbunden, die mit den Polen der Kraftfahrzeugbatterie (B) leitend verbunden ist.

Weiterhin ist eine Reihenschaltung eines Zentralverriegelungsschalters (ZV), der durch eine in der Figur nicht dargestellte Zentralverriegelung eines Kraftfahrzeuges steuerbar ist, und eines dritten Widerstandes (R3) vorgesehen, die ebenfalls mit den Polen der Kraftfahrzeugbatterie (B) verbunden ist. Der Mittelabgriff dieser Reihenschaltung von drittem Widerstand (R3) und Zentralverriegelungsschalter (ZV) ist mit zwei Flankendiskriminatoren (F1, F2) leitend verbunden, von denen der erste Flankendiskriminator (F1) zur Erkennung der positiven Schaltflanke des Zentralverriegelungsschalters (ZV) dient. Der zweite Flankendiskriminator (F2) dient zur Erkennung der negativen Schaltflanke des Zentralverriegelungsschalters (ZV). Das Ausgangssignal des zweiten Flankendiskriminators (F2) wird dem ersten Zeitglied (Z1) als Eingangssignal zugeführt. Das Ausgangssignal des ersten Flankendiskriminators (F1) wird einem zweiten Und-Glied (U2) als Eingangssignal zugeführt, das als weiteres Eingangssignal das invertierte Ausgangssignal des ersten Zeitgliedes (Z1) erhält. Das Ausgangssignal dieses zweiten Und-Gliedes (U2) wird dem zweiten Zeitglied (Z2) als Eingangssignal zugeführt.

Schließlich ist eine weitere Reihenschaltung eines ersten Widerstandes (R1) mit dem Türkontaktschalter (TK) vorgesehen, die mit den Polen der Kraftfahrzeugbatterie (B) verbunden ist. Der Mittelabgriff dieser Reihenschaltung von erstem Widerstand (R1) und Türkontaktschalter (TK) ist mit dem ersten Zeitglied (Z1) und mit einem ersten Und-Glied (U1) verbunden, das als weiteres Eingangssignal das Ausgangssignal des zweiten Zeitgliedes (Z2) erhält. Das Ausgangssignal des ersten Und-Gliedes (U1) wird dem zweiten Flankendiskriminator (F2) zugeführt.

Die erfindungsgemäße Verzögerungsschaltung gemäß der Figur funktioniert folgendermaßen:

Nur in der Stellung 2 des Wahlschalters (WS), bei dem der Schaltkontakt mit dem in der Figur linken Festkontakt verbunden ist, ist die erfindungsgemäße Verzögerungsschaltung in Betrieb. Der Türkontaktschalter (TK) soll sich in dem in der Figur dargestellten geöffneten Zustand befinden, wenn die jeweilige Kraftfahrzeugtür geschlossen ist. Der in der Figur dargestellte Zündschalter (ZS) soll sich in dem dargestellten geöffneten Zustand befinden, wenn die Zündung ausgeschaltet ist. Der in der Figur dargestellte Zentralverriegelungsschalter (ZV) soll sich in der dargestellten geöffneten Stellung befinden wenn das Kraftfahrzeug verriegelt ist

Es sei nun angenommen, daß sich der Wahlschalter in der Stellung (2) befindet und das Kraftfahrzeug sich über die Zentralverriegelung im entriegelten Zustand befindet, so daß der Zentralverriegelungsschalter (ZV) geschlossen ist. Zugleich soll die Zündung ausgeschaltet sein, so daß der Zündschalter (ZS) geöffnet ist. Wird nun eine Tür geöffnet, so wird für die Dauer der Türöffnung der Türkontaktschalter (TK) geschlossen. Mit dem Schließen des Türkontaktschalters (TK) wird in dem ersten Zeitglied (Z1) ein Signal erzeugt, das dem Oder-Glied (O) zugeführt wird, und der Transistor (T) wird über seine Steuerelektrode in den leitenden Zustand geschaltet, so daß der Glühlampenstromkreis geschlossen wird und die Innenleuchte (L) aufleuchtet. Nach dem Schließen der Fahrzeugtür und dem damit verbundenen Öffnen des Türkontaktschalters (TK) beginnt die vorgegebene Einschaltzeitdauer des ersten Zeitgliedes (Z1) von etwa 8 Sekunden zu laufen, während der das die Einschaltung der Innenleuchte (L) beleuchtende Eingangssignal am Ausgang des ersten Zeitgliedes (Z1) erhalten bleibt.

Während dieser Zeitdauer hat der Bediener des Kraftfahrzeuges die Möglichkeit, sich z. B. anzugurten und die Zündung einzuschalten. Sobald die Zündung eingeschaltet wird, wird der Zündschalter (ZS) geschlossen, was einen Potentialwechsel am Verbindungspunkt des Zündschalters (ZS) mit dem zweiten Widerstand (R2) hervorruft. Dieser Potentialwechsel wird von dem ersten Zeitglied (Z1) detektiert, das daraufhin unmittelbar als Folge des Schließens des Zündschalters (ZS) sein Ausgangssignal ändert, so daß der Transistor (T) in den nichtleitenden Zustand geschaltet wird und die Innenleuchte (L) ausgeschaltet wird. Dieser beschriebene Auflauf der Dinge entspricht der normalen Funktion bekannter Verzögerungsschaltungen.

Nunmehr sei angenommen, daß alle Türen geschlossen sind, so daß die Türkontaktschalter (TK) geöffnet sind. Weiterhin sei angenommen, daß die Zündung ausgeschaltet ist und der Zündschalter (ZS) geöffnet ist. Der Zentralverriegelungsschalter (ZV) befinde sich im in der Figur dargestellten geöffneten Zustand, so daß das Fahrzeug verriegelt ist. Wenn nun der Bediener des Kraftfahrzeuges die Zentralverriegelung im Sinne einer Entriegelung des Kraftfahrzeuges betätigt, so wird der Zentralverriegelungsschalter (ZV) geschlossen, was zu einem Potentialwechsel an dem Verbindungspunkt des Zentralverriegelungsschalters mit dem dritten Widerstand (R3) führt. Dieser Potentialwechsel erfolgtvon einem niedrigen Potential, das im wesentlichen dem Massepotential des Kraftfahrzeuges entspricht, zu dem positiven Potential (+) der Kraftfahrzeugstromquelle (B). Diese positive Schaltflanke des Schaltzustandwechsels des Zentralverriegelungsschalters (ZV) wird parallel den beiden Flankendiskriminatoren (F1, F2) zugeführt. Der erste Flankendiskriminator für die Erkennung der positiven Schaltflanke erkennt daraufhin diese positive Schaltflanke und erzeugt ein Ausgangssignal, das an dem zweiten Und-Glied (U2) anliegt. Zugleich liegt das invertierte Ausgangssignal des ersten Zeitgliedes (Z1) an dem Und-Glied (U2) an, das, da das erste Zeitglied nicht eingeschaltet ist, ebenfalls auf Massepotential liegt und aufgrund der Invertierung am Eingang des zweiten Und-Gliedes (U2) vom zweiten Und-Glied (U2) als positives Eingangssignal erkannt wird. Aufgrund der Gleichheit des Potentials der beiden Eingangssignale des zweiten Und-Gliedes (U2) liefert das zweite Und-Glied (U2) an das zweite Zeitglied (Z2) ein Ausgangssignal, das das zweite Zeitglied (Z2) dazu veranlaßt, seinen Signalpegel am Ausgang zu wechseln, so daß über das Oder-Glied (O) und die Steuerelektrode der Transistor (T) durchgeschaltet wird und die Lichtquelle (L) nunmehr leuchtet.

Das Einschalten der Lichtquelle wird für die vorgegebene zweite Zeitdauer des zweiten Zeitgliedes (Z2) aufrecht erhalten. Diese Einschaltzeitdauer beträgt im vorliegenden Ausführungsbeispiel etwa 30 Sekunden. Nach Ablauf der Einschaltzeitdauer von 30 Sekunden wird die Innenleuchte (L) ausgeschaltet, weil der Transistor (T) in seinem gesperrten Zustand geschaltet wird. Aufgrund der entsprechenden Änderung des Ausgangssignals des zweiten Zeitgliedes (Z2) wird weiterhin die Innenleuchte (L) sofort ausgeschaltet, wenn während der zweiten Zeitdauer von 30 Sekunden der Zündschalter (ZS) aufgrund des Einschaltens der Zündung geschlossen wird, da das Potential am Verbindungspunkt des Zündschalters (ZS) mit dem zweiten Widerstand (R2) in diesem Falle ebenfalls vom Massepotential im wesentlichen zum positiven Potential der Stromquelle (B) wechselt und dieses Eingangssignal parallel auch dem zweiten Zeitglied (Z2) zugeleitet wird.

Eine dritte Möglichkeit der Ausschaltung des zweiten Zeitgliedes (Z2) während der zweiten Zeitdauer von 30 Sekunden besteht darin, daß während dieser zweiten Zeitdauer von 30 Sekunden neben der Entriegelung des Kraftfahrzeuges und damit dem Schließen des Zentralverriegelungsschalters (ZV) das Öffnen einer Tür erfolgt, so daß der Türkontaktschalter (TK) schließt und damit das Potential am Verbindungspunkt des Türkontaktschalters (TK) mit dem ersten Widerstand (R1) von im wesentlichen positiven Potential zu im wesentlichen Massepotential wechselt. In diesem Fall wird das erste Zeitglied (Z1) eingeschaltet und erzeugt nach dem Schließen der Kraftfahrzeugtür und damit dem Öffnen des Türkontaktschalters (TK) ein Ausgangssignal, das ebenfalls uber das Oder-Glied (O) den Transistor (T) durchgeschaltet und damit die Innenleuchte (L) eingeschaltet hält. Durch diese Änderung des Ausgangssignals des ersten Zeitgliedes (Z1) wird jedoch der entsprechende Eingang des zweiten Und-Gliedes (U2) derart umgeschaltet, daß nunmehr an diesem Eingang im wesentlichen Massepotential anliegt. Dieser Signalwechsel hin zum Massepotential führt zu einer Änderung der Ausgangsspannung des zweiten Und-Gliedes (U2), das damit das zweite Zeitglied (Z2) ausschaltet. In diesem Falle bleibt die Innenleuchte (L) nur fur die durch das erste Zeitglied (Z1) vorgegebene Zeitdauer eingeschaltet.

Nun ist weiterhin der Fall denkbar, daß der Bediener des Kraftfahrzeuges das Kraftfahrzeug verläßt und nach dem Verlassen des Kraftfahrzeuges das Kraftfahrzeug verriegelt uber die Zentralverriegelung, so daß der Zentralverriegelungsschalter (ZV) wieder geöffnet wird. In diesem Fall ändert sich das Potential am Verbindungspunkt des Zentralverriegelungsschalters (ZV) und des dritten Widerstandes (R3) von im wesentlichen positiven Werten (+) zu Massepotential. Dieser negative Flankenwechsel wird von dem zweiten Flankendiskriminator (F2) als solcher erkannt, und der zweite Flankendiskriminator (F2) liefert abhängig von den folgenden Bedingungen ein Ausgangssignal an das erste Zeitglied (Z1), das dieses Zeitglied (Z1) einschaltet. Diese Bedingung ist, daß der Türkontaktschalter (TK) zu diesem Zeitpunkt geöffnet ist und daß das zweite Zeitglied (Z2) zu diesem Zeitpunkt ein Ausgangssignal erzeugt, um die Innenleuchte (L) eingeschaltet zu halten.

Das heißt, dieser Zweig zur Einschaltung des ersten Zeitgliedes (Z1) über den Zentralverriegelungsschalter (ZV) ist nur dann wirksam, wenn das Kraftfahrzeug kurz zuvor entriegelt wurde, so daß noch die Einschaltzeitdauer des zweiten Zeitgliedes (Z2) läuft. Befand sich jedoch das Kraftfahrzeug vor dem Verriegeln längere Zeit im entriegelten Zustand, so daß in jedem Falle diese zweite Zeitdauer des zweiten Zeitgliedes (Z2) abgelaufen ist, so wird das erste Zeitglied (Z1) über den Zentralverriegelungsschalter (ZV) und den zweiten Flankendiskriminator (F2) nicht mehr eingeschaltet, da in diesem Falle davon ausgegangen wird, daß entweder die Verzögerung der Ausschaltung der Innenleuchte (L) über den Türkontaktschalter (TK) und das erste Zeitglied (Z1) erfolgt oder aber der Bediener des Kraftfahrzeuges das Kraftfahrzeug nur verriegeln möchte, ohne eine weitere Kontrolle des Kraftfahrzeuginnenraums über die eingeschaltete Innenleuchte (L).

Die beschriebenen Zeitdauern des ersten Zeitgliedes (Z1) von 8 Sekunden und des zweiten Zeitgliedes (Z2) von 30 Sekunden sind unter dem Gesichtspunkt gewählt, daß es sich bei der Zentralverriegelung des Kraftfahrzeuges um eine sogenannte fernbetätigbare Zentralverriegelung handelt. Handelt es sich bei der Zentralverriegelung des Kraftfahrzeugs um eine allgemein übliche schlüsselbetätigte Zentralverriegelung, so kann z. B. die zweite Zeitdauer des zweiten Zeitgliedes (Z2) gegebenenfalls entsprechend kürzer z. B. gleich 15 Sekunden gewählt werden.

## Patentansprüche

1. Verzögerungsschaltung für die Innenraumbeleuchtung eines Kraftfahrzeuges, mit mindestens einer Innenleuchte (L), mit die Innenleuchte (L) schaltenden Schaltmitteln (O, T), mit die Steuerelektrode der Schaltmittel (O, T) zeithaltend beeinflussenden Zeitgliedern (Z1, Z2), mit einem ein erstes Zeitglied (Z1) steuernden Türkontaktschalter (TK), mit einem zweiten Zeitglied (Z2) und mit einem durch eine Zentralverriegelung des Kraftfahrzeuges steuerbaren Zentralverriegelungsschalter (ZV), dadurch gekennzeichnet, daß das zweite Zeitglied (Z2) durch den Zentralverriegelungsschalter (ZV) einschaltbar ist und daß das zweite Zeitglied (Z2) die Steuerelektrode der Schaltmittel (O, T) im Sinne einer Einschaltung der Innenleuchte (L) zeithaltend beeinflußt.

2. Verzögerungsschaltung nach Anspruch 1, dadurch gekennzeichnet, daß die Einschaltzeitdauer der Zeitglieder (Z1, Z2) unterschiedlich sind, wobei die Einschaltzeitdauer des zweiten Zeitgliedes (Z2) größer ist als die Einschaltzeitdauer des ersten Zeitgliedes (Z1).

3. Verzögerungsschaltung nach Anspruch 2, dadurch gekennzeichnet, daß die Einschaltzeitdauer des zweiten Zeitglieds (Z2) etwa 2- bis 5mal, insbesondere 4mal solang ist wie die Einschaltzeitdauer des ersten Zeitglieds (Z1).

4. Verzögerungsschaltung nach Anspruch 1, dadurch gekennzeichnet, daß Verknüpfungsmittel (O2) vorgesehen sind, die das zweite Zeitglied (Z2) unwirksam schalten, wenn das erste Zeitglied (Z1) eingeschaltet ist.

5. Verzögerungsschaltung nach Anspruch 1, dadurch gekennzeichnet, daß ein Zündschalter (ZS) vorgesehen ist, der bei eingeschalteter Zündung die Zeitglieder (Z1, Z2) unwirksam schaltet.

6. Verzögerungsschaltung nach Anspruch 1, dadurch gekennzeichnet, daß das zweite Zeitglied (Z2) durch eine Schaltflanke des Zentralverriegelungsschalters (ZV) steuerbar ist.

7. Verzögerungsschaltung nach Anspruch 6, dadurch gekennzeichnet, daß ein drittes Zeitglied durch die andere Schaltflanke des Zentralverriegelungsschaiters (ZV) steuerbar ist.

8. Verzögerungsschaltung nach Anspruch 7, dadurch gekennzeichnet, daß das dritte Zeitglied nur dann durch die andere Schaltflanke des Zentralverriegelungsschalters (ZV) steuerbar ist, wenn die Schaltflanke während der Einschaltzeitdauer des zweiten Zeitgliedes (Z2) auftritt und wenn die Türen des Kraftfahrzeuges geschlossen sind.

9. Verzögerungsschaltung nach Anspruch 7, dadurch gekennzeichnet, daß als drittes Zeitglied das erste Zeitglied (Z1) verwendet wird, das durch die andere Schaltflanke des Zentralverriegelungsschalters (ZV) zusätzlich steuerbar ist.

10. Verzögerungsschaltung nach Anspruch 1, dadurch gekennzeichnet, daß die Zeitglieder (Z1, Z2) elektrische RC-Glieder sind.

11. Verzögerungsschaltung nach Anspruch 1, dadurch gekennzeichnet, daß die Zentralverriegelung fernbetätigbar ist.

## Claims

1. Time-delay circuit for the interior illumination of a motor vehicle, having at least one interior lamp (L); switching means (O, T) which operate the interior lamp (L); timers (Z1, Z2) which influence the control electrode of the switching means (O, T) so as to delay it; a door switch (TK) controlling a first timer (21); a second timer (22); and a central locking switch (ZV) adapted to be controlled by a central locking system of the motor vehicle, characterised in that the second timer (Z2) is adapted to be switched on by the central locking switch (ZV) and that the second timer (Z2) influences the control electrode of the switching means (O, T) in a delaying manner so as to switch on the interior lamp (L).

2. Time-delay circuit according to claim 1, characterised in that the ON-times of the timers (Z1, Z2) are different, the ON-time of the second timer (Z2) being greater than the ON-time of the first timer (Z1).

3. Time-delay circuit according to claim 2, characterised in that the ON-time of the second timer (Z2) is roughly two to five times, in particular four times, the length of the ON-time of the first timer (Z1).

4. Time-delay circuit according to claim 1, characterised in that logic elements (O2) are provided which disable the second timer (Z2) if the first timer (Z1) is switched on.

5. Time-delay circuit according to claim 1, characterised in that an ignition switch (ZS) is provided which disables the timers (Z1, Z2) whenever the ignition is switched on.

6. Time-delay circuit according to claim 1, characterised in that the second timer (Z2) can be controlled by one switching edge of the central locking switch (ZV).

7. Time-delay circuit according to claim 6, characterised in that a third timer can be controlled by the other switching edge of the central locking switch (ZV).

8. Time-delay circuit according to claim 7, characterised in that the third timer can only be controlled by the other switching edge of the central locking switch (ZV) when the switching edge appears during the ON-time of the second timer (Z2) and when the doors of the motor vehicle are shut.

9. Time-delay circuit according to claim 7, characterised by the use of the first timer (Z1) as the third timer, said first timer being additionally able to be controlled by the other switching edge of the central locking switch (ZV).

10. Time-delay circuit according to claim 1, characterised in that the timers (Z1, Z2) are electric RC elements.

11. Time-delay circuit according to claim 1, characterised in that the central locking system can be operated remotely.

## Revendications

1. Circuit de temporisation pour l'éclairage de l'habitacle d'un véhicule à moteur, avec au moins une applique lumineuse intérieure (L), avec des moyens de commutation (O, T) de mise en circuit/hors circuit de l'applique intérieure (L), avec des éléments de temporisation (Z1, Z2) qui, par temporisation, influencent l'électrode de commande des moyens de commutation (O,T), avec un contacteur de porte (TK) qui commande un premier élément de temporisation (L1), avec un second élément de temporisation (Z2) et avec un contacteur de verrouillage centralisé (ZV) que peut commander un verrouillage centralisé du véhicule à moteur, circuit caractérisé par le fait que le second élément de temporisation (Z2) peut être mis en circuit par le contacteur de verrouillage centralisé (ZV) et que le second élément de temporisation, (Z2) infleunce par temporisation, l'électrode de commande des moyens de commutation O, T) dans le sens d'une mise en circuit de l'applique lumineuse intérieure (L).

2. Circuit de temporisation selon la revendication 1, caractérisé par le fait que les durées de temporisation des éléments de temporisation (Z1, Z2) sont différentes, la durée de temporisation du second élément de temporisation(Z2) étant supérieure à la durée de temporisation du premier élément de temporisation (Z1).

3. Circuit de temporisation selon la revendication 2, caractérisé par le fait que la durée de temporisation du second élément de temporisation (Z2) est environ 2 à 5 fois, en particulier 4 fois, aussi longue que la durée de temporisation du premier élément de temporisation.

4. Circuit de temporisation selon la revendication 1, caractérisé par le fait que sont prévus des moyens (02) de liaison logique qui rendent inactif le second élément de temporisation (Z2) lorsque le premier élément de temporisation (Z1) est activé.

5. Circuit de temporisation selon la revendication 1, caractérisé par le fait qu'est prévu un contacteur d'allumage (ZS) qui, lorsque l'allumage est mis en circuit, rend inactifs les éléments de temporisation.

6. Circuit de temporisation selon la revendication 1, caractérisé par le fait que le second élément de temporisation (Z2) peut être commandé par une pente du potentiel du contacteur de verrouillage centralisé (ZV).

7. Circuit de temporisation selon la revendication 6, caractérisé par le fait qu'un troisième élément de temporisation peut être commandé par l'autre pente du potentiel du contacteur de verrouillage centralisé (ZV).

8. Circuit de temporisation selon la revendication 7, caractérisé par le fait que le troisième élément de temporisation ne peut être commandé par l'autre pente du potentiel du contacteur de verrouillage centralisé (ZV) que si le changement de pente apparaît pendant la durée de temporisation du second élément de temporisation (Z2) et si les portes du véhicule à moteur sont fermées.

9. Circuit de temporisation selon la revendication 7, caractérisé par le fait que comme troisième élément de temporisation on emploie le premier élément de temporisation (Z) qui peut en outre être commandé par l'autre pente du potentiel du contacteur de verrouillage centralisé (ZV).

10. Circuit de temporisation selon la revendication 1, caractérisé par le fait que les éléments de temporisation (Z1, Z2) sont des éléments électriques RC.

11. Circuit de temporisation selon la revendication 1, caractérisé par le fait que le verrouillage centralisé peut être télécommandé.
